# FASCICULE DE BREVET EUROPEEN

(11) **EP 0 861 761 B1**
(45) Date de publication et mention de la délivrance du brevet: **10.10.2001**
(21) Numéro de dépôt: 98400286.5
(22) Date de dépôt: 09.02.1998
(51) Int. Cl.: B60R 21/22

(54) **Module interchangeable pour sac gonflable de protection, pour siège de véhicule automobile**
Auswechselbares Airbagmodul für einen Kraftfahrzeugssitz
Interchangeable airbag module, for an automotive vehicle seat

(30) Priorité: 21.02.1997 FR 9702107
(43) Date de publication de la demande: 02.09.1998
(73) Titulaire: AUTOMOBILES PEUGEOT, 75116 Paris (FR); AUTOMOBILES CITROEN, 92200 Neuilly-sur-Seine (FR)
(72) Inventeur: Tereygeol, Jean-François, 92290 Chatenay-Malabry (FR)
(74) Mandataire: Armengaud Ainé, Alain

(56) Documents cités:
- EP-A- 0 788 941
- WO-A-97/45297
- DE-A- 19 642 938
- FR-A- 2 696 392
- US-A- 5 564 739
- US-A- 5 601 332
- PATENT ABSTRACTS OF JAPAN vol. 097, no. 009, 30 septembre 1997 & JP 09 132102 A (IKEDA BUSSAN CO LTD;NISSAN MOTOR CO LTD), 20 mai 1997,
- PATENT ABSTRACTS OF JAPAN vol. 096, no. 010, 31 octobre 1996 & JP 08 156668 A (IKEDA BUSSAN CO LTD), 18 juin 1996,
- PATENT ABSTRACTS OF JAPAN vol. 097, no. 001, 31 janvier 1997 & JP 08 230603 A (TOYOTA MOTOR CORP), 10 septembre 1996,

## Description

La présente invention est relative à un module de sac gonflable, communément désigné dans la technique sous le terme "air bag", pour véhicule automobile, notamment destiné à protéger, en cas de choc latéral, le côté correspondant de l'occupant d'un siège de ce véhicule, ce module étant interchangeable de manière à permettre, après sa mise en oeuvre, un remplacement rapide et aisé pour une éventuelle autre utilisation.

On connaît déjà dans le domaine des constructeurs automobiles diverses réalisations de tels sacs gonflables en cas de choc, destinés à la protection latérale d'un passager assis sur un siège avant d'un véhicule, l'air bag, conditionné dans une enveloppe appropriée, étant incorporé dans la matelassure du siège ou dans un espace prévu à cet effet entre celle-ci et son armature de support, en étant recouvert par l'enveloppe ou coiffe du siège.

Le déploiement de l'air bag, en cas d'urgence, notamment au moment d'un choc créant, par l'effet d'inertie en résultant, le déclenchement d'un système de libération du sac et le gonflage instantané de celui-ci, est réalisé à travers une ouverture provoquée à cet instant dans cette coiffe, en particulier selon une ligne d'affaiblissement de celle-ci, constituée par exemple par une couture.

Un exemple d'air bag de ce genre est décrit à titre indicatif dans la demande de brevet britannique GB-A-2 296 476 et dans le brevet US-A-5 601 332.

Une telle structure, qui est dans son principe celle la plus généralement mise en oeuvre dans les véhicules actuels, présente cependant divers inconvénients, essentiellement du fait que la maîtrise de la déchirure de la coiffe n'est pas assurée de façon parfaite sous l'effet du gonflement brutal de la poche étanche de ce sac.

En outre, le fait que le module comportant le sac gonflable avec les moyens propres à assurer son expansion soit enfermé à l'intérieur du siège complique le montage et le remplacement de l'air bag après usage. A noter qu'un tel sac, même non utilisé, doit être remplacé périodiquement pour garantir sa fiabilité.

L'invention a pour but d'éviter ces inconvénients, grâce à un module de sac gonflable interchangeable, pour lequel l'ouverture du sac et son expansion peuvent être mieux maîtrisées, l'ensemble présentant des facultés améliorées lorsqu'il s'agit d'effectuer le remplacement du sac et son montage.

L'invention propose dans ce but un module qui est indépendant du siège lui-même et qui se situe à l'extérieur de la coiffe ou revêtement externe de celui-ci.

A cet effet, le module considéré, comportant de façon en elle-même connue, un ensemble enfermé dans un capot externe comprenant dans sa surface une zone affaiblie facilitant sa rupture sous l'effet de l'expansion du sac gonflable, un déclencheur pour commander cette expansion et un diffuseur de gaz provoquant le gonflage du sac sous l'effet du déclencheur, se caractérise en ce que le capot externe est apte à être monté dans un logement ouvert, entièrement ménagé dans le côté latéral du siège à l'extérieur du garnissage de celui-ci, et comporte des moyens de fixation contre le fond de ce logement.

Par différence avec l'état de la technique, le module d'air bag ainsi envisagé n'est plus entouré par la coiffe ou revêtement similaire qui habille le siège du véhicule, mais est disposé à l'extérieur du garnissage de celui-ci. Il est autonome et n'est plus lié à la fabrication de la sellerie du siège lui-même, constituant un ensemble indépendant qui peut être facilement monté et immobilisé sur ce siège, une fois celui-ci mis en place dans l'habitacle du véhicule.

Selon une caractéristique avantageuse du module considéré, les moyens de fixation du capot contre le siège sont démontables, de manière à permettre de remplacer facilement ce module par un autre dans le logement du siège, notamment après utilisation.

De préférence, le capot est fixé sur une plaque de support dans le fond du logement. Selon le cas, le capot est réuni à la plaque de support par une liaison vissée, emboîtée, encliquetée ou équivalente.

Selon une autre caractéristique également, le déclencheur comporte de préférence un dispositif de mise à feu électrique. Avantageusement, le fond du logement comporte par ailleurs des moyens de connexion électrique du déclencheur avec la batterie du véhicule.

L'invention a également pour objet un siège de véhicule automobile, équipé d'un module tel que défini dans ce qui précède.

D'autres caractéristiques d'un module interchangeable pour sac gonflable de protection, à monter sur le siège d'un véhicule automobile, établi conformément à l'invention, apparaîtront encore à travers la description qui suit de plusieurs exemples de réalisation, donnés à titre indicatif et non limitatif, en référence aux dessins annexés sur lesquels :
- La Figure 1 est une vue en perspective d'un siège de véhicule comportant un logement latéral pour le montage d'un module d'air bag selon l'invention.
- La Figure 2 est une vue en coupe transversale, à plus grande échelle, du module illustré sur la Figure 1.
- Les Figures 3 à 5 illustrent, en coupe transversale pour les deux premières, en coupe longitudinale pour la troisième, diverses variantes de réalisation des moyens de fixation du module dans son logement.

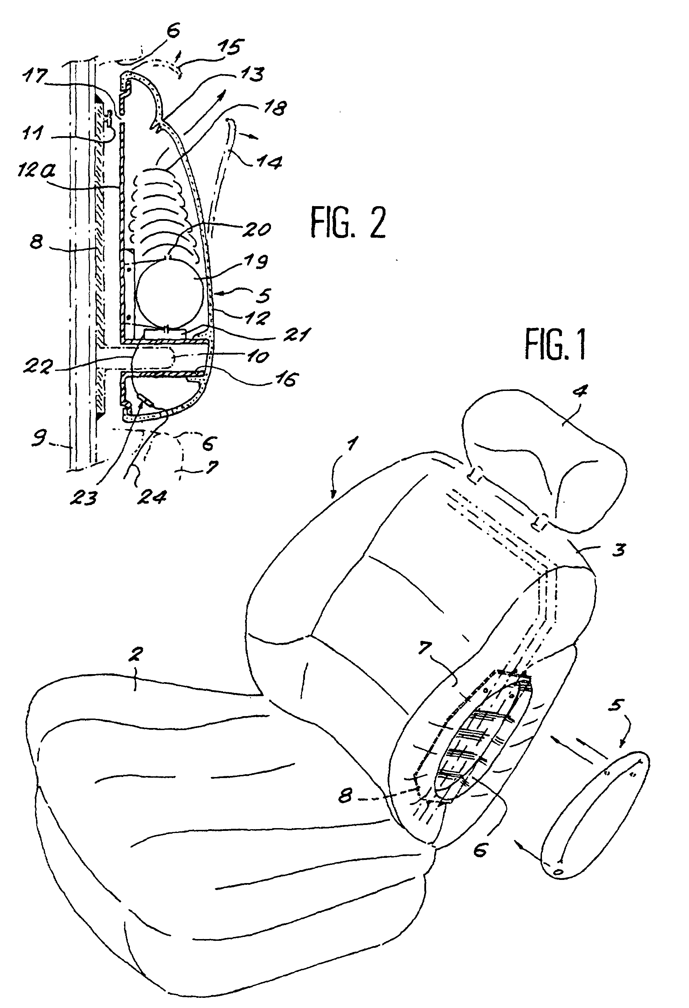

Sur la Figure 1, la référence 1 désigne dans son ensemble un siège avant pour véhicule automobile, la réalisation particulière de ce siège, notamment de son assise 2, de son dossier 3, et de l'appui-tête 4, monté à la partie supérieure du dossier, n'important pas directement à l'invention, le module d'air bag 5 envisagé étant bien entendu adaptable à n'importe quelle forme de siège.

Selon l'invention, le module 5 forme un ensemble indépendant du siège 1, lequel peut donc être réalisé séparément en usine et mis en place dans l'habitacle du véhicule, avant que le module ne soit disposé dans un logement ouvert 6, prévu sur le côté 7 du dossier 3, voisin de la paroi en regard de l'habitacle, le passager assis sur le siège devant être protégé par le sac gonflable du module vis-à-vis d'un choc latéral provoquant une déformation notable de cette paroi vers l'intérieur.

Le fond du logement 6 comporte une plaque de support 8, prévue par construction dans la matelassure du siège, cette plaque servant à fixer de manière amovible le module 5, afin en particulier de permettre le remplacement aisé de celui-ci après utilisation.

La Figure 2 illustre, à plus grande échelle, la structure du module d'air bag 5 et de la plaque 8 pour le support de celui-ci à l'intérieur du logement 6 prévu dans le côté 7 du dossier du siège.

Cette plaque 8 est solidarisée avec l'armature 9 du siège qui rigidifie convenablement celui-ci, cette plaque comprenant dans l'exemple représenté, des moyens pour le montage et la fixation du module 5, notamment constitués par un doigt de positionnement 10 et un organe d'accrochage 11.

Le module 5 se compose principalement d'un capot 12, formé d'une coque en matière plastique ou autre, cette coque comportant une zone affaiblie 13 dans sa surface extérieure, permettant sa rupture localisée, les deux parties 14 et 15 de la coque, de part et d'autre de la zone 13, pouvant s'ouvrir vers l'extérieur, comme illustré schématiquement en traits mixtes sur le dessin.

Le capot 12 comprend un élément tubulaire interne 16, ouvert à une extrémité pour permettre l'engagement du doigt de positionnement 10 lorsque la face plane 12a du capot 12, opposée à celle qui comporte la zone d'affaiblissement 13, vient s'appliquer contre la plaque de support 8, l'organe d'accrochage 11 coopérant avec une boutonnière 17 prévue dans ce fond pour immobiliser le module 5 dans le logement 6.

A l'intérieur du capot 12, le module 5 comporte, de façon classique pour ce type de dispositif, un sac gonflable 18, replié sur lui-même, ce sac étant en communication avec une réserve de gaz comprimé 19 par l'intermédiaire d'un conduit 20 muni d'un opercule frangible (non représenté), la rupture de cet opercule pouvant être réalisée par un déclencheur 21, sensible à un choc important auquel est soumis le véhicule.

Le déclencheur 21 peut être constitué par tout système classique, dont la mise en oeuvre est réalisée électriquement, en étant à cet effet relié à la batterie du véhicule par des fils de connexion 22 et 24, réunis par un connecteur 23.

Lorsque se produit un choc sur l'habitacle, dont l'amplitude assure le déclenchement du gonflage du sac 18, celui-ci s'expanse brutalement en brisant le capot au droit de la zone d'affaiblissement 13 et se répartit à l'extérieur, en particulier contre le côté 7 du siège où est prévu le logement ouvert 6, en protégeant ainsi latéralement le passager assis sur ce siège.

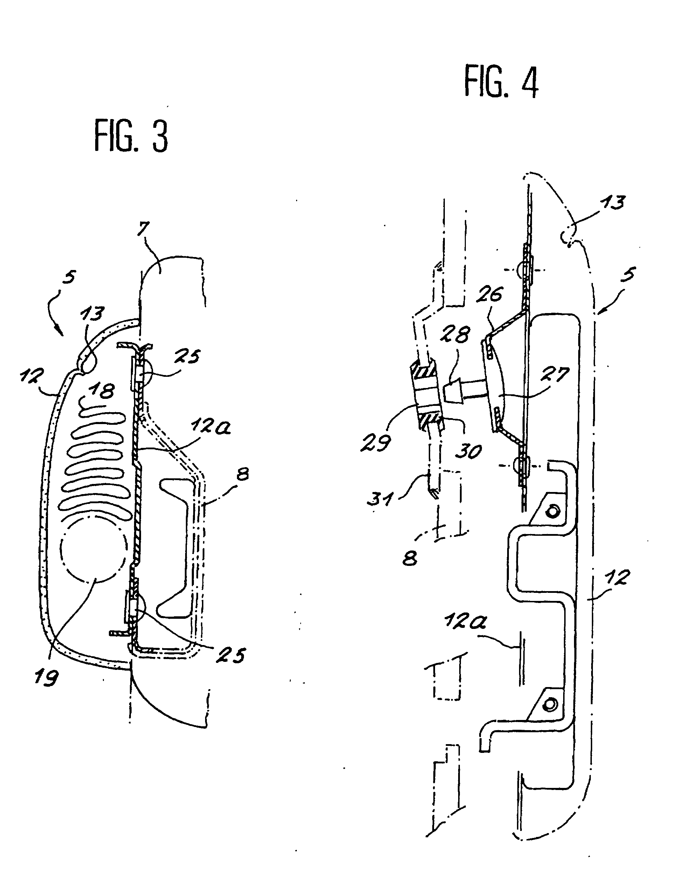

Les Figures 3, 4 et 5 illustrent diverses variantes des moyens qui permettent la fixation du capot 12 du module 5 dans son logement ouvert prévu sur le côté 7 du siège du véhicule. Sur ces figures, on a repris les mêmes références que précédemment pour désigner les mêmes organes.

Ainsi, sur la Figure 3, la face plane 12a du capot 12 est solidarisée avec la plaque de support 8 fixée à l'armature du siège au moyen de rivets 25, lesquels peuvent être aisément retirés par un outil usuel lorsqu'il s'agit de remplacer le module.

Sur la Figure 4, la liaison entre la face 12a du capot 12 et la plaque de support 8 est réalisée par encliquetage. A cet effet, le capot comporte une partie emboutie 26, en relief, sur laquelle est sertie la tête 27 d'un pion 28, lequel peut être engagé à force à la manière d'un bouton pression dans un passage 29 d'une bague de retenue 30, elle-même sertie dans une plaquette solidaire du support, la mise en place ou le retrait du module 5 s'effectuant par application à celui-ci d'un simple effort de poussée ou de traction.

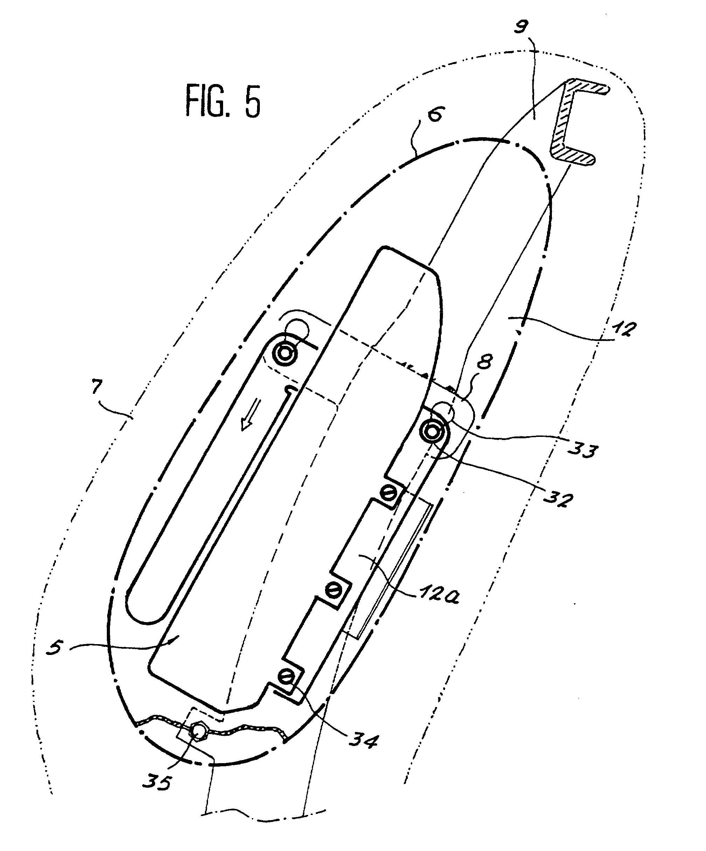

Dans la Figure 5 enfin, le capot 12 du module 5 comporte dans sa face opposée 12a des tétons en saillie 32, aptes à coopérer avec des rainures 33, ménagées dans la plaque de support 8, l'immobilisation du capot s'effectuant, après avoir fait pénétrer les tétons dans la partie élargie de ces rainures, en déplaçant parallèlement à lui-même le capot pour les engager dans une partie étroite de ces mêmes rainures, prolongeant la précédente, la fixation étant complétée par une vis 35 prévue à la partie inférieure du module. Des vis 34 sont utilisées pour immobiliser les différents composants du module logés à l'intérieur du capot.

On réalise ainsi un module d'air bag interchangeable dont la conception favorise mieux que dans les réalisations actuellement mises en oeuvre l'ouverture du sac gonflable, son déploiement n'étant pas entravé par les contraintes pouvant provenir de la matelassure et autres garnissages et revêtements du siège. De plus, la réalisation séparée du module et du siège facilite un changement rapide de ce module, et rend plus simple son montage en série, notamment en fin de chaîne de fabrication du siège.

Bien entendu, il va de soi que l'invention ne se limite pas aux exemples de réalisation plus spécialement décrits ci-dessus en référence aux dessins annexés ; elle en embrasse au contraire toutes les variantes. En particulier, aucune limitation n'est à prendre en compte pour ce qui concerne les moyens de fixation du module dans son logement, les modalités de fabrication des composants de ce module n'étant pas par ailleurs modifiées, sauf en relation avec la structure de la coque formant le capot et de sa zone d'affaiblissement, laquelle peut être prévue dans la surface externe de cette coque, au meilleur endroit pour que le sac, une fois gonflé, assure la protection latérale la plus efficace pour l'usager.

## Revendications

1. Module interchangeable pour sac gonflable de protection pour siège de véhicule automobile, comportant un ensemble enfermé dans un capot externe (12) comprenant dans sa surface une zone affaiblie (13) facilitant sa rupture sous l'effet de l'expansion du sac gonflable (18), un déclencheur (21) pour commander cette expansion et un diffuseur de gaz (19) provoquant le gonflage du sac sous l'effet du déclencheur, **caractérisé en ce que** le capot externe est apte à être monté dans un logement ouvert (6), entièrement ménagé dans le côté latéral (7) du dossier (3) du siège, à l'extérieur du garnissage de celui-ci, et comporte des moyens de fixation (11, 17, 25, 27, 32, 33) contre le fond de ce logement.

2. Module selon la revendication 1, **caractérisé en ce que** les moyens de fixation du capot contre le siège sont démontables.

3. Module selon l'une des revendications 1 ou 2, **caractérisé en ce que** le capot (12) est fixé sur une plaque de support (8) dans le fond du logement (6).

4. Module selon la revendication 3, **caractérisé en ce que** le capot (12) est réuni à la plaque de support (8) par une liaison vissée, emboîtée, encliquetée ou équivalente.

5. Module selon l'une quelconque des revendications 1 à 4, **caractérisé en ce que** le déclencheur (21) comporte un dispositif de mise à feu électrique.

6. Module selon la revendication 5, **caractérisé en ce que** le fond du logement (6) comporte des moyens de connexion électrique (22, 23, 24) avec la batterie du véhicule.

7. Siège de véhicule automobile, équipé d'un module interchangeable selon l'une quelconque des revendications 1 à 6.

## Patentansprüche

1. Austauschbares Airbagmodul für einen Kraftfahrzeugsitz, umfassend eine von einem externen Gehäuse (12) umschlossene Einheit, das an seiner Oberfläche einen geschwächten, sein Aufreißen unter Expansionseinwirkung des Airbags erleichternden Bereich (13) umfaßt, einen Auslöser (21) zum Expansionsauslösen und einen Gasdiffusor (19), der das von dem Auslöser erwirkte Aufblasen des Airbags ausführt, **dadurch gekennzeichnet, daß** das externe Gehäuse in einer offenen Aufnahrne (6) montierbar ist, die vollständig an der Seite (7) der Sitzlehne (3) in deren Außenpolsterung ausgespart ist, und Mittel (11,17,25,27,32,33) zum Befestigen an dem Boden dieser Aufnahme umfaßt.

2. Modul nach Anspruch 1, **dadurch gekennzeichnet, daß** die Mittel zum Befestigen des Gehäuses an dem Sitz entfernbar sind.

3. Modul nach einem der Ansprüche 1 oder 2, **dadurch gekennzeichnet, daß** das Gehäuse (12) auf einer Trägerplatte (8) am Boden der Aufnahme (6) befestigt ist.

4. Modul nach Anspruch 3, **dadurch gekennzeichnet, daß** das Gehäuse (12) mit der Trägerplatte (8) über eine Schraubenverbindung, eine Steckverbindung, eine Schnappverbindung oder dergleichen gekoppelt ist

5. Modul nach einem der Ansprüche 1 bis 4, **dadurch gekennzeichnet, daß** der Auslöser (21) einen elektrischen Funkengeber umfaßt.

6. Modul nach Anspruch 5, dadurch **gekennzeiuhnet,** daß der Boden der Aufnahme (6) Mittel (22,23,24) zum elektrischen Verbinden mit der Fahrzeugbatterie umfaßt.

7. Kraftfahrzeugsitz ausgestattet mit einem austauschbaren Modul nach einem der Ansprüche 1 bis 6.

## Claims

1. Interchangeable module for an inflatable protective bag for an automotive vehicle seat, comprising a unit which is enclosed in an external casing (12) comprising, in its surface, a weakened zone (13) facilitating the rupture thereof due to the expansion of the inflatable bag (18), a release mechanism (21) for controlling this expansion and a gas diffuser (19) causing inflation of the bag under the influence of the release mechanism, **characterised in that** the external casing can be fitted in an open recess (6) made completely in the lateral side (7) of the seat back (3), at the exterior of the covering thereof and comprises fixing means (11, 17, 25, 27, 32, 33) for fixing it against the bottom of this recess.

2. Module according to claim 1, **characterised in that** the means for fixing the casing against the seat are detachable.

3. Module according to any of claims 1 or 2, **characterised in that** the casing (12) is fixed on a support plate (8) in the bottom of the recess (6).

4. Module according to claim 3, **characterised in that** the casing (12) is connected to the support plate (8) by a screwed, nesting, latching or equivalent joint.

5. Module according to any of claims 1 to 4, **characterised in that** the release mechanism (21) comprises an electrical igniter.

6. Module according to claim 5, **characterised in that** the bottom of the recess (6) comprises electrical connecting means (22, 23, 24) for connection to the vehicle battery.

7. Automotive vehicle seat, equipped with an interchangeable module according to any of claims 1 to 6.
